Europäisches Patentamt

**European Patent Office**

**Office européen des brevets**

(19)

(11) Publication number: **0 028 763**
**B1**

(12) **EUROPEAN PATENT SPECIFICATION**

(45) Date of publication of patent specification: **15.02.84**

(51) Int. Cl.³: **B 23 K 20/00, B 23 K 20/22**

(21) Application number: **80106609.3**

(22) Date of filing: **28.10.80**

(54) Method for pressure bonding metal members by utilizing eutectic reaction.

(30) Priority: **29.10.79 JP 138780/79**

(43) Date of publication of application:
**20.05.81 Bulletin 81/20**

(45) Publication of the grant of the patent:
**15.02.84 Bulletin 84/7**

(84) Designated Contracting States:
**FR GB NL SE**

(56) References cited:
**CH - A - 481 715**
**GB - A - 1 533 522**
**US - A - 3 121 785**
**US - A - 3 417 461**

(73) Proprietor: **Hitachi, Ltd.**
**5-1, Marunouchi 1-chome**
**Chiyoda-ku Tokyo 100 (JP)**

(72) Inventor: **Miyazaki, Kunio**
**2598-5, Ohkubo-cho**
**Hitachi-shi Ibaraki (JP)**
Inventor: **Tamamura, Takeo**
**2-16-18, Nishinarusawa-cho**
**Hitachi-shi Ibaraki (JP)**
Inventor: **Kumagai, Akira**
**1358-2, Tajiri-cho**
**Hitachi-shi Ibaraki (JP)**
Inventor: **Suzuki, Hitoshi**
**4-84, Kawajiri-cho**
**Hitachi-shi Ibaraki (JP)**
Inventor: **Ochiai, Izumi**
**2024-6, Kurai, Oohira-machi Shimotsuga-gun**
**Tochigi-ken (JP)**

(74) Representative: **Strehl, Peter et al,**
**Strehl, Schübel-Hopf, Schulz Patentanwälte**
**Widenmayerstrasse 17 Postfach 22 03 45**
**D-8000 München 22 (DE)**

Courier Press, Leamington Spa, England.

Method for pressure bonding metal members by a eutectic reaction

This invention relates to a method of pressure bonding at least two metal members by utilizing a eutectic reaction as set forth in the preamble of claim 1. Such a method is known from Swiss patent specification No. 481 715.

The invention also relates to a method of pressure bonding at least two members of the same metal by utilizing a eutectic reaction as set forth in the preamble of claim 5. Such a method is known from US patent specification No. 3 121 785.

In these prior art methods, the contacting surfaces of the two metal members, which either contain an element forming a eutectic composition or sandwich an insert comprising an element which undergoes a eutectic reaction with the metal of the two members, are heated under pressure so that the eutectic composition is formed, and the liquid phase of the eutectic composition is squeezed out from between the contacting surfaces to achieve pressure bonding between the two members.

The liquid phase of the eutectic reaction contains oxides and other surface contaminations of the metal members to be bonded, and therefore, results in a brittle material when converted into the solid state. Therefore, if liquid eutectic reaction is allowed to solidify and remain at the interface between the bonded members, the strength of the bond is reduced. In an attempt to avoid the oxidation of the contacting surfaces of the two members by heating, the Swiss patent specification No. 481 715 proposes to provide the aluminum member with a protective layer prior to heating, and to use the copper member cold. In practice, however, these measures will be insufficient to prevent oxides from forming and remaining at the interface.

It is the object of the present invention to improve the known methods for pressure-bonding metal members in such a manner that a strong pressure bond between two metal members is achieved which does not rupture, even if oxides and other contaminations initially exist on the contacting surfaces of the members.

This object is met by the characterizing features of claim 1 and, respectively, those of claim 5. The increased pressure applied in accordance with the invention in squeezing out the liquid eutectic composition will reduce the thickness of the layer of eutectic composition, that is allowed to remain and solidify at the interface, to such a minimum value which does not affect the strength of the bond. Since the preceding heating is performed in an oxygen-enriched atmosphere, oxides are formed over the contacting surfaces which are squeezed out with the liquid eutectic composition, entraining any other surface contaminations and minimizing any existing voids. The heating in an atmosphere having a higher oxygen concentration than the air and the application of an increased pressure in squeezing out the liquid eutectic composition according to the present invention result in a pressure-bond of higher strength than previously achieved.

Preferably, one of the two members of dissimilar metals to be joined by pressure bonding is formed with at least one projection on the surface to be bonded, and the projection is force-fitted in the surface of the other member to be bonded. This arrangement makes it possible to simplify the means for bringing the members into intimate contact with each other. The contacting surfaces of the two members are generally maintained in intimate contact with each other by making them flat and smooth by machining and applying pressure thereto. The aforesaid arrangement makes it possible to tolerate ordinary finishes of the surfaces and to reduce the pressure applied thereto.

When two members of aluminum and copper were pressure bonded to each other and the strength of the joint formed was tested, the method according to the present invention has shown a satisfactory result in that it is not at the bond but in the aluminum of the member that rupture occurred. In the case of a combination of aluminum and copper, the optimum heating temperature range is between the eutectic temperature and the eutectic temperature +50°C. If the heating temperature is higher than the eutectic temperature +50°C, the liquid becomes too great in quantity and may remain near the bond in the form of fins. Formation of fins mars the appearance of the joint, and it is time consuming to remove the fins. Also, when the members to be bonded are small parts or pipes, there is the danger that a large amount of liquid produced by eutectic reaction makes it impossible to keep the product in good shape. An upset pressure necessary for squeezing out from the contacting surfaces to be bonded the liquid produced by eutectic reaction and at the same time effecting pressure bonding of the surfaces is preferably in the range between 150 and 710 bar. The lower limit in the range or 150 bar is essential for squeezing out the liquid to keep the surfaces to be bonded substantially free from oxides and other surface contamination, and the upper limit or 710 bar is the highest pressure necessary for effecting pressure bonding by utilizing eutectic reaction.

It is desirable that the bonded surfaces be immediately cooled as soon as the liquid is squeezed out therefrom, in any conceivable combination of dissimilar metals including aluminum and copper. Although the joint formed by the method according to the invention is higher in strength than the joint formed by the method of the prior art even if the bonded surfaces are not cooled, the strength of the joint can be increased by cooling the bonded surfaces. If no special cooling means is used to cool the bonded surfaces and the surfaces are cooled by natural cooling following the squeezing out of the liquid, a eutectic reaction will take place again to produce a liquid phase, or a brittle intermetallic compound phase will be produced depending on the combination of the metals to be bonded, with the result that such phase will be present in a portion of the bonded surfaces. It is desirable that such phase does not exist in the bond formed between the surfaces of the members. Elimination of such phase from the bond makes it necessary to immediately cool the bonded surfaces as aforesaid. The bonded surfaces are preferably cooled to a temperature at which no liquid eutectic reaction and no intermetallic compound phase is formed. However, the surfaces may be cooled to room temperature if it is desirable to simplify the process. It is necessary that cooling be effected at a rate high enough to avoid the formation of the liquid eutectic reaction or the intermetallic compound phase. This can be attained by blowing gas or liquid against the bonded surfaces. When the metals are aluminum and copper, the bonded surfaces should be cooled to about 100°C immediately after the liquid is squeezed out, and the rate of cooling is preferably in the range between 10 and 500°C/s. If the surfaces are cooled to a temperature below 100°C, then no eutectic reaction takes place and no intermetallic compound phase is formed. Also, when the cooling rate is higher than 10°C/s, it is possible to inhibit the formation of the liquid phase and intermetallic compound phase to a degree such that a sound bond is produced between the surfaces of the members. It is meaningless to raise the cooling rate above the upper limit of 500°C/s because such raise will only add to the cost of production.

While the above description of preferred developments of the invention has referred to a combination of dissimilar metals, it likewise applies to the pressure bonding of members of the same metal, such as a combination of aluminum-aluminum or copper-copper, where an insert is interposed between the members to be bonded.

The principles of the method according to the invention will be described by referring to the drawings.

Fig. 1 is a diagrammatic representation of the pressure bonding cycle of the method according to the invention;

Figs. 2A and 2B are views showing, stage by stage, the principles of the pressure bonding method according to the invention, Fig. 2A showing an embodiment wherein aluminum and copper are pressure bonded and Fig. 2B showing an embodiment wherein copper is pressure bonded to copper by using an insert;

Fig. 3 is a diagrammatic representation of the relation between the thickness of the residual eutectic phase and tensile strength obtained when a pipe of pure aluminum is pressure bonded to a pipe of pure copper;

Fig. 4 is a microscopic photograph showing an example of the bond formed by pressure bonding between a rod of pure aluminum and a rod of pure copper, wherein no eutectic phase is present in the bond;

Fig. 5 is a microscopic photograph showing an example of the bond formed by pressure bonding between a rod of pure aluminum and a rod of pure copper, wherein the eutectic phase remains in the bond;

Figs. 6 and 7 are sectional views of a rod of pure aluminum and a rod of pure copper joined by pressure bonding according to one embodiment of the present invention; and

Fig. 8 is a sectional view of a pipe of pure aluminum and a pipe of pure copper joined by pressure bonding according to another embodiment of the present invention.

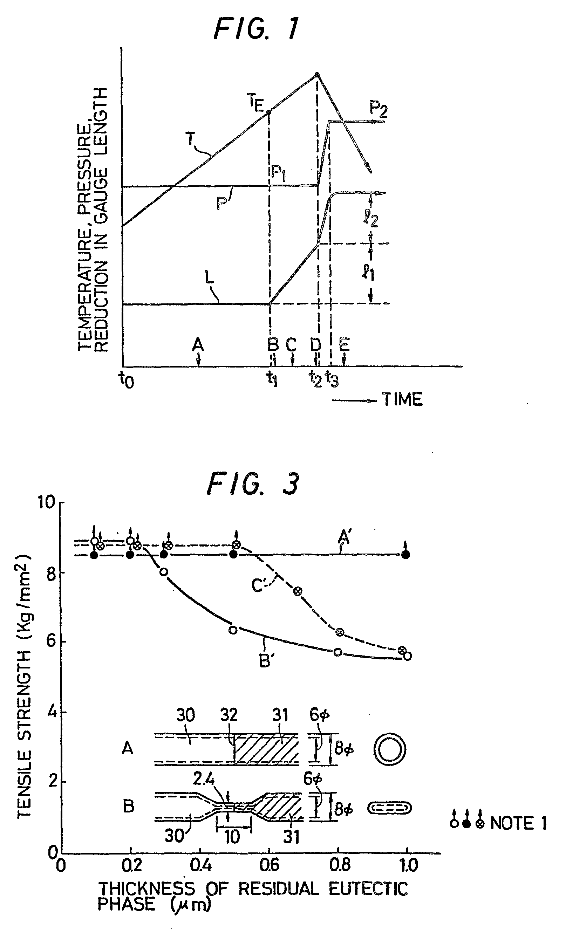

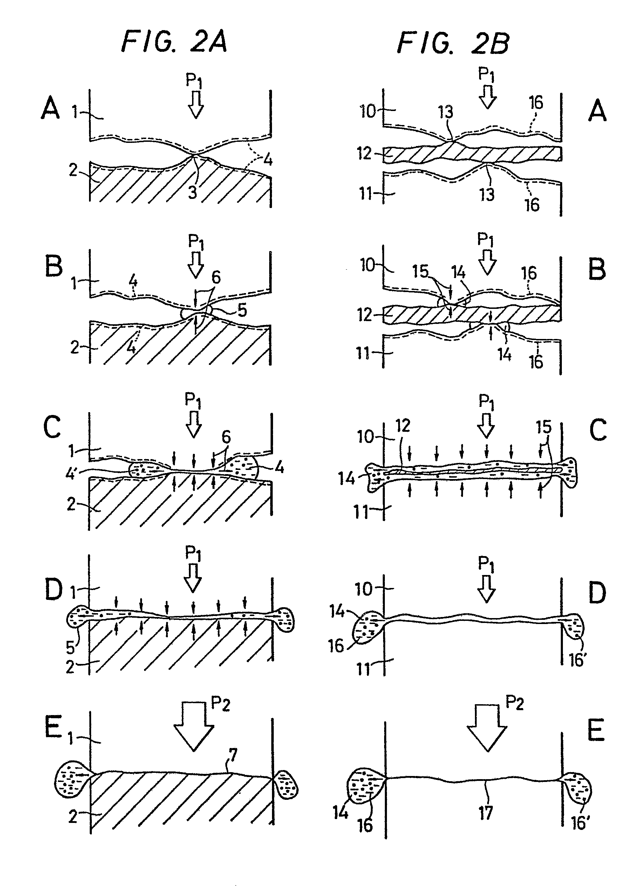

In Fig. 1, a curve T represents the temperature and a point $T_E$ represents the eutectic temperature. A curve P represents the pressure, with $P_1$ representing the contacting pressure under which the members to be bonded are brought into contact with each other, and $P_2$ representing an upset pressure for squeezing out the liquid eutectic composition at the time effecting pressure bonding of the members. A curve L represents the reduction in gauge length. In this specification, the term "reduction in gauge length is defined as the difference between the gauge length of a predetermined value obtained by using the interface of the members to be bonded as a mid-point and the gauge length which is reduced by the pressure $P_1$ or $P_2$. $l_1$ represents the reduction in gauge length brought about by the production of liquid eutectic composition under the contacting pressure $P_1$, and $l_2$ represents the reduction in gauge length brought about by squeezing out the liquid eutectic composition under the upset pressure $P_2$. On the horizontal axis, $t_0$ indicates the time at which the heating temperature begins to rise after the members to be bonded are brought into contact with each other under the contacting pressure $P_1$, $t_1$ indicates the time at which the heating temperature reaches the eutectic temperature, $t_2$ indicates the time at which the pressure is switched from $P_1$ to $P_2$, and $t_3$ indicates the time at which the pressure has reached the upset pressure $P_2$. The symbols A, B, C, D and E on the horizontal axis in Fig. 1 designate different stages of operation used for describing the pressure bonding method according to the invention by referring to Fig. 2.

The principles of the pressure bonding method according to the present invention will now be described stage by stage by referring to Fig. 2.

I. Pressure bonding of dissimilar metals (Al-Cu) ...See Fig. 2A.

Stage A
A member 1 of aluminum and a member 2 of copper are brought into contact with each other at contacting surfaces thereof and maintained under the contacting pressure $P_1$, and the contacting surfaces of the members 1 and 2 are heated in an atmosphere richer of oxygen than the air, whereby an oxide film 4 on the contacting surfaces may be broken to form a plurality of minute junctions 3, so that contacting points of aluminum and copper free of the oxide film 4 are provided.

Stage B
At this stage, the temperature of the contacting surfaces is increased to the eutectic temperature level. As soon as the temperature reaches the eutectic temperature level, production of a liquid 5 of eutectic composition by the eutectic reaction between aluminum and copper begins from the junctions 3.

Stage C
With the progress of production of the liquid 5 of eutectic composition from the junctions 3, aluminum and copper begin to melt in the direction of the arrows 6, and the contacting surfaces maintained under the contacting pressure $P_1$ rapidly expand and are flattened, with the result that the oxide film 4 and the oxide 4' formed in voids on the contacting surfaces are incorporated in the liquid 5.

Stage D
At this stage, the eutectic reaction takes place throughout the surfaces to be bonded, and aluminum and copper melt out from the members 1 and 2 in equal quantity as indicated by the arrows.

Stage E
An upset pressure $P_2$ greater than the contacting pressure $P_1$ is applied with an impact to the members 1 and 2, to squeeze out from the contacting surfaces to be bonded the liquid 5 remaining therein and at the same time to effect pressure bonding of the members 1 and 2 by the pressure $P_2$. After the application of the upset pressure $P_2$ for a very short time, heating is stopped and the bonded surfaces are cooled to prevent the liquid 5 from being further produced at the interface 7 formed by the bonded surfaces, and the high temperature zone of the bonded members 1 and 2 is rapidly cooled (substantially to 200°C) to prevent a brittle compound phase from being produced between aluminum and copper. The upset pressure should be applied before the temperature of the contacting surfaces becomes lower than the eutectic temperature.

II. Pressure bonding of the same metal (Al-Al, Cu-Cu)...See Fig. 2B

Stage A
A thin sheet 12 of a metal of low melting point which undergoes eutectic reaction with the metal of members 10 and 11 is placed as an insert between the surfaces of the members 10 and 11 to be bonded, the members 10 and 11 and the insert 12 are brought into contact with one another and maintained under a contacting pressure $P_1$, and heating of the members 10 and 11 and the insert 12 in an atmosphere richer of oxygen than the air is initiated. When the members 10 and 11 are formed of aluminum, the insert 12 is formed of silver, copper, silicon or a hypereutectic alloy of one of these elements with aluminum. When the members 10 and 11 are formed of copper, the insert 12 is formed of silver, aluminum or a hypereutectic alloy of one of these elements with copper.

Stage B
Production of a liquid 14 of eutectic composition by eutectic reaction begins from junctions between the members 10 and 11 and the insert 12, when the heating temperature reaches a eutectic temperature level. This causes the metal of the members 10 and 11 to melt out as shown at 15. When the insert 12 is of a hypereutectic alloy, the members 10 and 11 and the insert 12 begin to melt at the eutectic temperature of the insert 12 itself. Eutectic reaction also takes place between the excess alloying elements of the molten insert and the metal of the members 10 and 11, with the result that the metal of the members 10 and 11 melts out to remove the oxide film 16 and oxide 16' formed in the voids.

Stage C
At this stage, eutectic reaction takes place throughout the surfaces to be bonded, and the insert 12 is consumed to become further smaller in thickness.

Stage D
The insert 12 is completely melted and disappears, thereby terminating the eutectic reaction.

Stage E
An upset pressure $P_2$ greater than the contacting pressure $P_1$ is applied with an impact to the surfaces to be bonded, to squeeze out the residual liquid eutectic composition and at the same time effect pressure bonding of the members 10 and 11 at the surfaces to be bonded. The upset pressure should be applied before the temperature of the contacting surfaces becomes lower than the eutectic temperature. Since the members 10 and 11 are of the same metal, no eutectic reaction takes place at an interface 17 formed by the bonded surfaces, so that there is no need to rapidly cool the bond 17, following the pressure bonding of the members 10 and 11.

Although there are shown examples in which only two metal members are bonded in accordance with the present invention, it goes without saying that more than two metal members can be bonded.

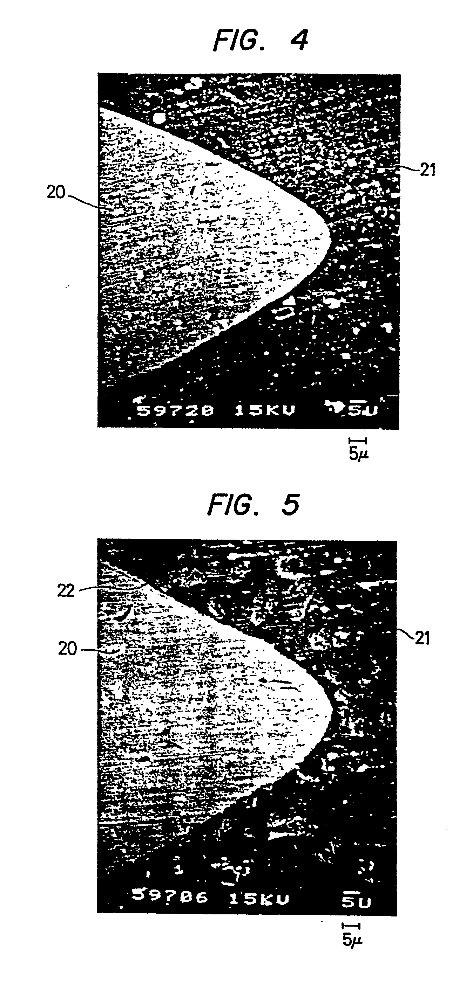

The principles of the method according to the invention for effecting pressure bonding of members of dissimilar metals and of the same metal have been described stage by stage hereinabove. Microscopic photgraphs of the interface formed by the bonded surfaces are shown in Figs. 4 and 5.

In Figs. 4 and 5, a rod 20 of pure copper formed at its forward end with a wedge-shaped projection is bonded to a rod 21 of pure aluminum by pressure bonding. In Fig. 4, no eutectic phase is seen at the interface, but in Fig. 5 there is a eutectic phase 22 of small thickness remaining at the interface. As described hereinabove, the presence of a residual eutectic phase at the interface of the bonded members is not desirable. Tests were conducted to determine the influence of the residual eutectic phase on the tensile strength of members pressure bonded to each other. The results of these tests are shown in Fig. 3.

In Fig. 3, A designates specimens obtained by joining pipes 30 and 31 of pure aluminum and pure copper, respectively, of 8 mm in outer diameter and 6 mm in inner diameter at an interface 32 by the pressure bonding method according to the present invention. B designates specimens obtained by subjecting the specimens A to flattening at a flattening rate of 70% so that the specimens A are compressed at the interface to reduce the outer diameter by 2.4 mm across the width of 10 mm. A straight line A′ represents the tensile strengths of the specimens A (flattening rate:0%) determined by tension tests. A curve B′ in Fig. 3 represents the tensile strengths of the specimens B (flattening rate: 70%) determined by tension tests. A curve C′ represents the tensile strengths of specimens, not shown, determined by tension tests, the specimens of this case being compressed at a flattening rate of 40%. In Note 1 of Fig. 3, there are points each having an upwardly directed arrow, which represent specimens in which rupture occurred in the members bonded. Other points with no arrows represent specimens in which rupture occurred at the bond between the members.

In Fig. 3, it will be seen that in the case of specimens A that had not been flattened, rupture occurred in the member of aluminum when there was a residual eutectic phase of a thickness of as small as 1 $\mu$m. In the case of specimens B that had been flattened at a flattening rate of 70%, it will be seen that the bonded members separated from each other at the interface and no rupture occurred in the bonded members, when the residual eutectic phase had a thickness of over 0.2 $\mu$m. It will be seen that when the specimens were flattened at a flattening rate of 40%, no rupture occurred in the bonded members when the residual eutectic phase had a thickness of over 0.5 $\mu$m.

In view of the results of tests described hereinabove, it will be evident that the thickness of the residual eutectic phase should be below 0.2 $\mu$m to obtain a bond at the interface of enough strength to withstand rupture.

It is added that the aforesaid tests were conducted under severe conditions in order that such tests may be conducted on merchandise planned to be produced by the applicant. Therefore, when the members to be bonded are not pipes or when the members to be bonded are of the same metal (Al-Al, for example), a residual eutectic phase of a slightly larger thickness than 0.2 $\mu$m can be tolerated. It is important that the surfaces of the members to be joined by pressure bonding are cleaned by having oxides and other surface contamination broken and incorporated in a liquid eutectic composition, and pressure bonding of the members is effected by applying an upset pressure in such a manner that the liquid eutectic composition having the impurities incorporated is squeezed out from the contacting surfaces to be bonded prior to effecting pressure bonding thereof. It is preferable to form a wedge-shaped projection at a forward end of one of the metal members to be bonded.

Examples of pressure bonding of members of dissimilar metals and of the same metal carried out by the method according to the present invention will now be described.

Example 1

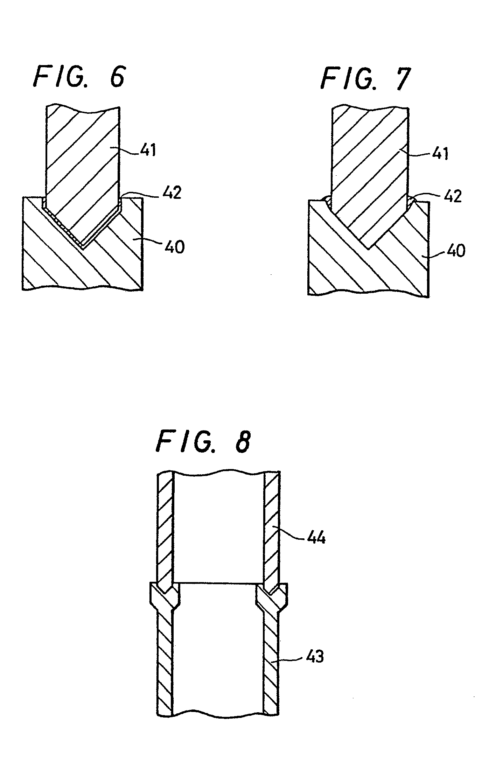

A rod of pure aluminum and a rod of pure copper were prepared. The rod of pure aluminum had a diameter of 8 mm, and the rod of pure copper had a diameter of 5 mm. The pure copper rod was formed at one end surface thereof with a wedge-shaped portion of a vertical angle of 45° and had a surface roughness of ±5 $\mu$m. The wedge-shaped portion of the pure copper rod was force-fitted into one end of the pure aluminum rod by using a restraining jig, and the vicinity of the portions of the two rods was heated to 550°C by high frequency induction heating in oxygen (about 100%). Since the eutectic temperature of pure copper and pure aluminum is about 548°C, the heating temperature exceeded the eutectic temperature. After the heating temperature had been maintained at the aforesaid level for 5 seconds, heating was interrupted and an upset pressure of 500 bar was applied to the surfaces to be bonded of the pure aluminum rod and pure copper rod substantially simultaneously as heating was interrupted. Substantially simultaneously as the application of the upset pressure, blowing of air against the bonded surfaces was begun to avoid the production of a liquid eutectic composition by eutectic reaction and the formation of an intermetallic compound. Prior to the application of the upset pressure, a liquid phase 42 existed between the contacting surfaces of the pure aluminum rod 40 and the pure copper rod 41 as shown in Fig. 6, but the liquid phase 42 was squeezed out from the bonded surfaces as shown in Fig. 7 by the application of the upset pressure. Specimens were obtained from the joint formed by pressure bonding as described above and tested by tension and bending tests. In the two tests, the specimens were ruptured in the pure aluminum rod.

Example 2

A pipe of pure aluminum and a pipe of pure copper were prepared. The pipe of pure aluminum had an outer diameter of 8.0 mm, an inner diameter of 6.0 mm and a length of 90.9 mm, and the pipe of pure copper had an outer diameter of 8.0 mm, an inner diameter of 6.4 mm and a length of 85.0 mm. Prior to effecting pressure bonding, the pure aluminum pipe was compressed at one end surface thereof to increase the thickness of the pipe in the vicinity of the end surface to 1.8 times as great as the original value. Meanwhile the pure copper rod was formed at one end surface thereof with a wedge-shaped portion of a vertical angle of 45° and finished to have a surface roughness of ±5 $\mu$m. Then, the wedge-shaped portion of the pure copper pipe 44 was force-fitted into the compressed end surface of the pure aluminum pipe 43 as shown in Fig. 8. Following force-fitting, the vicinity of the portions of the two pipes was heated to 550°C by high frequency induction heating in oxygen (about 50%). After the heating temperature had been maintained at the aforesaid level for 5 seconds, heating was interrupted and simultaneously an upset pressure of 500 bar was applied to the surfaces to be bonded and blowing of air against the bonded surfaces was begun. Cooling of the bonded surfaces to 100°C took place at an average rate of about 90°C/s. Examination of the joint obtained by the aforesaid process with a microscope at a magnification of 400× has shown that the interface formed by the bonded surfaces of pure aluminum and pure copper was free of eutectic phase and intermetallic compound. Specimens of the joint were subjected to tension and bending tests. The results of the tests showed that no rupture occurred at the interface but occurred in the pure aluminum.

Example 3

A pure aluminum pipe and a pure copper pipe having an outer diameter of 8 mm, an inner diameter of 6 mm and a length of 90 mm were prepared. The contacting surfaces of these pipes were flat and had a surface roughness of ±5 $\mu$m. The pipes were brought into contact with each other under a contacting pressure of 0.8 kg/mm² and the vicinity of the contacting surfaces of the pipes was heated to 550°C in oxygen (about 100%). Then, an upset pressure of 560 bar was applied to the pipes to effect pressure bonding. The total period of time required for effecting pressure bonding was 5 seconds. Following completion of the pressure bonding, the bonded surfaces of the pipes were rapidly cooled by blowing air thereagainst. Tension tests conducted on the specimens of the joint formed by the aforesaid process showed that rupture occurred in the metals under a load of 1265 bar.

Example 4

A pure copper rod and a pure silver rod of a diameter of 4 mm and a length of 90 mm were prepared. The contacting surfaces of these rods were flat and had a surface coarseness of ±5 $\mu$m. The rods were brought into contact with each other under a contacting pressure of 80 bar and the vicinity of the contacting surfaces of the rods was heated to 782°C (these metals have a eutectic temperature of 780°C) in oxygen (about 100%). Then, an upset pressure of 425 bar was applied to the rods to effect pressure bonding. The total period of time required for effecting pressure bonding was 7 seconds. Following completion of the pressure bonding, the bonded surfaces of the rods were rapidly cooled by blowing air thereagainst. Tension tests conducted on the specimens of the joint formed by the aforesaid process showed that rupture occurred in the metals under a load of 1265 bar.

The examples described hereinabove involved pressure bonding of members of dissimilar metals to each other. Examples of using an insert to effect pressure bonding of members of the same metal will now be described.

The following examples 5—8 refer to pressure bonding of members of pure aluminum to each other. In each example, two pipes of pure aluminum of an outer diameter of 8 mm, an inner diameter of 6 mm and a length of 90 mm were prepared. The contacting surfaces of the pipes were flat and had a surface roughness of ±5 $\mu$m.

Example 5

A sheet of pure copper of a thickness of 0.1 mm was used as an insert which was interposed between the two pipes of pure aluminum. The pipes were maintained in contact with each other through the insert under a contacting pressure of 80 bar, and the contacting surfaces were heated to 550°C in oxygen (100%). Then, an upset pressure of 515 bar was applied to the pipes to effect pressure bonding. The total period of time required for effecting pressure bonding was 5 seconds. Since the members to be joined were both of aluminum, there was no need to effect rapid cooling. Tension tests conducted on the specimens of the joint formed by the aforesaid process showed that rupture occurred in the metal of the pipes under a load of 880 bar.

## Example 6

In effecting pressure bonding, a sheet of silver of a thickness of 0.1 mm was used as an insert. The heating temperature was 568°C (the eutectic temperature of silver and aluminum is 566°C) The contacting pressure, upset pressure, total time required for effecting pressure bonding and the atmosphere were the same as described in Example 5. Tension tests of the specimens of the joint formed by the aforesaid process showed that rupture occurred in the metal of the pipe under a load of 880 bar.

## Example 7

Silicon was used as a material for an insert, and a coat of silicon of a thickness of 0.2 $\mu$m was formed by vaporization deposition in vacuo on each of the contacting surfaces of the two pure aluminum pipes. The pipes were brought into contact with each other at the contacting surfaces coated with silicon as aforesaid and joined by pressure bonding. The heating temperature was 579°C (the eutectic temperature of aluminum and silicon is 577°C). Other conditions were the same as those described in Example 5. Tension tests conducted on the specimens of the joint formed by the aforesaid process showed that rupture occurred in the metal of the pipes under the same load as described in Example 6.

## Example 8

A sheet of Al-18% Si of 0.1 mm in thickness was used as an insert, and pressure bonding was effected under the same conditions as described in Example 5. Tension tests conducted on the specimens of the joint formed in the Example produced results similar to those of Example 7.

In Examples 9—10 presently to be described, members of pure copper were joined by pressure bonding. In each Example, two round bars of pure copper of 8 mm in diameter and 90 mm in length were prepared. The contacting surfaces of the two round bars were flat and had a surface coarseness of $\pm 5$ $\mu$m.

## Example 9

A sheet of silver of 0.1 mm in thickness was used as an insert which was interposed between the two round bars of pure copper. The two round bars were maintained under a contacting pressure of 100 bar in contact with each other through the silver insert, and the contacting surfaces were heated to 782°C (the eutectic temperature of copper and silver is 780°C) in oxygen (about 100%). An upset pressure of 710 bar was applied to the round bars to effect pressure bonding. The total period of time required for effecting pressure bonding was 7 seconds. Since the members to be joined were of copper, no rapid cooling was necessary. Tension tests conducted on the specimens of the joint formed by the aforesaid process showed that rupture occurred in the metal of the pipes under a load of 2180 bar.

## Example 10

A sheet of aluminum of a thickness of 0.1 mm was used as an insert which was interposed between the two round bars of pure copper.

The two round bars were maintained, under a contacting pressure of 100 bar, in contact with each other through the aluminum insert, and the contacting surfaces were heated to 550°C (the eutectic temperature of aluminum and copper is 548°C) in oxygen (about 100%). An upset pressure of 710 bar was applied to the round bars to effect pressure bonding. The total period of time required for effecting pressure bonding was 5 seconds. Tension tests conducted on the specimens of the joint formed by the aforesaid process showed that rupture occurred in the metal of the pipe under a load of 2180 bar.

From the foregoing description, it will be appreciated that according to the method of pressure bonding of this invention, pressure bonding of metal members can be effected positively in a short period of time even if oxides and other surface contamination are present on the contacting surfaces of the metal members. More specifically, the oxides and other surface contamination on the contacting surfaces of the metal members to be joined by pressure bonding and the oxides formed in the voids of the liquid phase are incorporated in the liquid eutectic composition and discharged to the outside when the liquid eutectic composition is squeezed out from the surfaces to be bonded by an upset pressure applied to the metal members, with the result that substantially no harmful foreign matter exists on the bonded surfaces of the metal members. Thus a joint of high strength can be formed by the metals of the members at the interface formed by the bonded surfaces, and rupture does not occur at such joint even if the pressure bonded members are subjected to tension tests.

A joint of high strength can be formed by the metals of the members even if the liquid phase is not completely squeezed out from the joint.

In case of a joint of aluminum–aluminum, the strength of the joint of this invention is higher about 15% than the strength of the joint formed in air, and the elongation of the joint of this invention is about twice the elongation of the joint formed in air.

## Claims

1. A method for pressure bonding at least two metal members by utilizing a eutectic reaction, comprising the steps of

forming at said members contacting surfaces which contain an element forming a eutectic composition upon heating to a temperature at which the eutectic reaction takes place,

heating the contacting surfaces under pressure for a time sufficient to form the eutectic composition, and

squeezing out the liquid eutectic composition from the contacting surfaces before the temperature falls below the eutectic temperature, characterized in

that the heating is performed in an atmosphere having an oxygen concentration higher than the air,

that the pressure applied during heating is lower than the plastic deformation pressure of the members, and

that after the eutectic composition is formed, the contacting pressure is increased to squeeze out the liquid eutectic composition.

2. The method of claim 1, characterized in that the bonded surfaces of the two members are cooled after the liquid eutectic composition has been squeezed out.

3. The method of claim 1 or 2, characterized in that one of the contacting surfaces is formed with at least one projecting portion.

4. The method of any of claims 1 to 3, characterized in that the metals of the two members are copper and silver or copper and aluminum.

5. A method of pressure bonding at least two members of the same metal by utilizing a eutectic reaction, comprising the steps of

placing an insert between the contacting surfaces of the two members, the insert comprising an element undergoing a eutectic reaction with the metal of the two members,

heating the contacting surfaces of the two members and the insert to a temperature lower than the melting point of the metal of the two members and no lower than the eutectic temperature of the element of the insert and the metal of the two members to produce a liquid eutectic composition by eutectic reaction between the surfaces of the two members,

applying pressure to the two members to squeeze out the liquid from the contacting surfaces, and

cooling the bonded surfaces of the two members, characterized in

that the heating of the two members is effected in an atmosphere having an oxygen concentration higher than the air and under a contacting pressure lower than the plastic deformation pressure of the metal of the two members, and

that the squeezing pressure is higher than the contacting pressure.

6. The method of claim 5, characterized in that the metal of the two members is aluminum, and that the insert is formed of copper or silver or silicon or of a hypereutectic alloy of aluminum and silver or aluminum and copper or aluminum and silicon.

7. The method of claim 5, characterized in that the metal of the two members is copper, and that the insert is formed of silver or aluminum or of a hypereutectic alloy of copper and silver or copper and aluminum.

8. The method of any of claims 2 to 7, characterized in that the cooling is performed rapidly at a cooling rate which substantially prevents the production of a liquid phase by eutectic reaction and an intermetallic compound phase on the bonded surfaces of the two members.

9. The method of claim 8, characterized in that the cooling rate is higher than $10°C/s$.

10. The method of any of claims 1 to 9, characterized in that the contacting surfaces of the two members are heated to a range between the eutectic temperature and $50°C$ above the eutectic temperature, and that the squeezing pressure is between 150 and 710 bar.

11. The method of any of claims 1 to 10, characterized in that the atmosphere in which heating takes place, is pure oxygen gas.

**Patentansprüche**

1. Verfahren zum Druckverbinden mindestens zweier Metallteile unter Verwendung einer eutektischen Reaktion, mit folgenden Verfahrensschritten:

Ausbilden von Kontaktflächen an den Teilen, wobei die Kontaktflächen ein Element enthalten, das bei Erwärmen auf eine Temperatur, bei der die eutektische Reaktion stattfindet, ein eutektisches Gemisch bildet,

Erwärmen der Kontaktflächen unter Druck über eine zur Bildung des eutektischen Gemisches ausreichende Zeitspanne, und

Herausquetschen des flüssigen eutektischen Gemisches von den Kontaktflächen, bevor die Temperatur unter die eutektische Temperatur sinkt, dadurch gekennzeichnet,

daß die Erwärmung in einer Atmosphäre durchgeführt wird, die eine höhere Sauerstoffkonzentration aufweist als die Luft,

daß der während der Erwärmung angewendete Druck niedriger ist als der plastische Verformungsdruck der Teile, und

daß nach der Ausbildung des eutektischen Gemisches der Kontaktdruck erhöht wird, um das flüssige eutektische Gemisch herauszuquetschen.

2. Verfahren nach Anspruch 1, dadurch gekennzeichnet, daß die verbundenen Oberflächen der beiden Teile gekühlt werden, nachdem das flüssige eutektische Gemisch herausgequetscht worden ist.

3. Verfahren nach Anspruch 1 oder 2, dadurch gekennzeichnet, daß eine der Kontaktflächen mit mindestens einem vorspringenden Abschnitt versehen ist.

4. Verfahren nach einem der Ansprüche 1 bis 3, dadurch gekennzeichnet, daß die Metalle der beiden Teile Kupfer und Silber oder Kupfer und Aluminium sind.

5. Verfahren zum Druckverbinden mindestens zweier Teile aus dem gleichen Metall unter Verwendung einer eutektischen Reaktion, mit folgenden Verfahrensschritten:

Einfügen einer Einlage zwischen die Kontaktflächen der beiden Teile, wobei die Einlage ein Element enthält, das mit dem Metall der beiden Teile eine eutektische Reaktion durchläuft,

Erwärmen der Kontaktflächen der beiden Teile und der Einlage auf eine Temperatur, die unter dem Schmelzpunkt des Metalls der beiden Teile und nicht unter der eutektischen Temperatur des Elements der Einlage und des Metalls der beiden Teile liegt, um durch eutektische Reaktion zwischen den Oberflächen der beiden Teile ein flüssiges eutektisches Gemisch zu erzeugen, Anwenden von Druck auf die beiden Teile zum Ausquetschen der Flüssigkeit von den Kontaktflächen, und

Kühlen der verbundenen Flächen der beiden Teile, dadurch gekennzeichnet,

daß die Erwärmung der beiden Teile in einer Atmosphäre bewirkt wird, die eine höhere Sauerstoffkonzentration aufweist als die Luft, und unter einem Kontaktdruck, der niedriger ist als der plastische Verformungsdruck des Metalls der beiden Teile, und

daß der Ausquetschdruck höher ist als der Kontaktdruck.

6. Verfahren nach Anspruch 5, dadurch gekennzeichnet, daß das Metall der beiden Teile Aluminium ist und daß die Einlage aus Kupfer oder Silber oder Silizium oder aus einer hypereutektischen Legierung Aluminium und Silber oder Aluminium und Kupfer oder Aluminium und Silizium gebildet.

7. Verfahren nach Anspruch 5, dadurch gekennzeichnet, daß das Metall der beiden Teile Kupfer ist, und daß die Einlage aus Silber oder Aluminium oder aus einer hypereutektischen Legierung von Kupfer und Silber oder Kupfer und Aluminium gebildet ist.

8. Verfahren nach einem der Ansprüche 2 bis 7, dadurch gekennzeichnet, daß die Abkühlung rasch mit einer Kühlgeschwindigkeit durchgeführt wird, die Erzeugung einer flüssigen Phase durch eutektische Reaktion und einer Phase intermetallischer Verbindung an den verbundenen Flächen der beiden Teile im wesentlichen verhindert.

9. Verfahren nach Anspruch 8, dadurch gekennzeichnet, daß die Kühlgeschwindigkeit über 10°C/s liegt.

10. Verfahren nach einem der Ansprüche 1 bis 9, dadurch gekennzeichnet, daß die Kontaktflächen der beiden Teile auf einen Bereich zwischen der eutektischen Temperatur und 50°C über der eutektischen Temperatur erwärmt werden, und daß der Ausquetschdruck zwischen 150 und 710 bar liegt.

11. Verfahren nach einem der Ansprüche 1 bis 10, dadurch gekennzeichnet, daß die Atmosphare, in der die Erwärmung stattfindet, reiner Sauerstoff ist.

**Revendications**

1. Procédé pour réaliser la liaison sous pression d'au moins deux éléments métalliques en utilisant une réaction eutectique, incluant les phases opératoires consistant à former, sur lesdits éléments, des surfaces de contact qui contiennent un élément formant une composition eutectique lors du chauffage à une température pour laquelle une température eutectique se produit, à chauffer les surfaces de contact sous pression pendant un intervalle de temps suffisant pour former la composition eutectique et à exprimer la composition eutectique liquide hors des surfaces de contact avant que la température ne tombe au-dessous de la température eutectique, caractérisé en ce q'on réalise le chauffage dans une atmosphère possédant une teneur en oxygène supérieure à celle de l'air, que la pression appliquée pendant le chauffage est inférieure à la pression de déformation plastique des éléments, et qu'une fois que la composition eutectique est formée, on augmente la pression de contact pour exprimer la composition eutectique liquide.

2. Procédé selon la revendication 1, caractérisé en ce qu'on refroidit les surfaces reliées entre elles des deux éléments après que la composition eutectique liquide a été exprimée.

3. Procédé selon la revendication 1 ou 2, caractérisé en ce que l'une des surfaces de contact comporte au moins une partie saillante.

4. Procédé selon l'une quelconque des revendications 1 à 3, caractérisé en ce que les métaux des deux éléments sont du cuivre et de l'argent ou du cuivre et de l'aluminium.

5. Procédé pour réaliser la liaison sous pression d'au moins deux éléments constitués par le même métal moyennant l'utilisation d'une réaction eutectique, comprenant les phases opératoires consistant à introduire un insert entre les surfaces de contact des deux éléments, ledit insert comportant un élément formant une réaction eutectique avec le métal des deux éléments, à chauffer les surfaces de contact des deux éléments et l'insert à une température inférieure au point de fusion du métal des deux éléments et non inférieure à la température eutectique de l'élément de l'insert et du métal des deux éléments de manière à produire une composition eutectique liquide par réaction eutectique entre les surfaces des deux éléments, à appliquer une pression aux deux éléments de manière à exprimer le liquide hors des surfaces de contact, et à refroider les surfaces reliées entre elles des deux éléments, caractérisé en ce qu'on réalise le chauffage des deux éléments dans une atmosphère possédant une teneur en oxygène supérieure à celle de l'air et sous une pression de contact inférieure à la pression de déformation plastique du métal des deux éléments, et que la pression d'expression est supérieure à la pression de contact.

6. Procédé selon la revendication 5, caractérisé en ce que le métal des deux éléments est de l'aluminium et que l'insert est constitué par du cuivre ou de l'argent ou du silicium ou par un alliage hypereutectique d'aluminium et d'argent ou d'aluminium et de cuivre ou d'aluminium et de silicium.

7. Procédé selon la revendication 5, caractérisé en ce que le métal des deux éléments est du cuivre et que l'insert est constitué par de l'argent ou de l'aluminium ou par un alliage hypereutectique de cuivre et d'argent ou de cuivre et d'aluminium.

8. Procédé selon l'une quelconque des revendications 2 à 7, caractérisé en ce que le refroidissement est réalisé rapidement à une vitesse de refroidissement qui empêche essentiellement la production d'une phase liquide par réaction eutectique et d'une phase d'un composé intermétallique sur les surfaces reliées entre elles des deux éléments.

9. Procédé selon la revendication 8, caractérisé en ce que la vitesse de refroidissement est supérieure à 10°C/s.

10. Procédé selon l'une quelconque des revendications 1 à 9, caractérisé en ce que les surfaces de contact des deux éléments sont chauffées dans une gamme comprise entre la température eutectique et 50°C au-dessus de la température eutectique, et que la pression d'expression est comprise entre 150 et 710 bars.

11. Procédé selon l'une quelconque des revendications 1 à 10, caractérisé en ce que l'atmosphère, dans laquelle le chauffage est réalisé, est de l'oxygène pur.

# FIG. 1

# FIG. 3

FIG. 2A   FIG. 2B

## FIG. 4

## FIG. 5

## FIG. 6

41
42
40

## FIG. 7

41
42
40

## FIG. 8

44
43